# EUROPEAN PATENT SPECIFICATION

(11) **EP 4 385 936 B1**
(45) Date of publication and mention of the grant of the patent: **27.05.2026**
(21) Application number: 23216659.5
(22) Date of filing: 14.12.2023
(51) Int. Cl.: B66F 9/12, B62B 3/06

(54) **ELECTRIC EXTENDING FORK FOR A FORK-LIFT TRUCK OR PALLET TRUCK, FORKLIFT TRUCK OR PALLET TRUCK PROVIDED THEREWITH AND METHOD THEREFOR**
ELEKTRISCHE HUBGABEL FÜR EINEN GABELSTAPLER ODER PALETTENHUBWAGEN, GABELSTAPLER ODER PALETTENHUBWAGEN DAMIT UND VERFAHREN DAFÜR
FOURCHE ÉLECTRIQUE COULISSANTE POUR CHARIOT ÉLÉVATEUR À FOURCHE OU TRANSPALETTE, CHARIOT ÉLÉVATEUR À FOURCHE OU TRANSPALETTE ÉQUIPÉ DE CELLE-CI ET PROCÉDÉ ASSOCIÉ

(30) Priority: 15.12.2022 NL 2033726
(43) Date of publication of application: 19.06.2024
(73) Proprietor: Meijer Holding B.V., 9079 NG Sint Jacobiparochie (NL)
(72) Inventor: MEIJER, Hendrik, 9079 NG Sint Jacobiparochie (NL)
(74) Representative: Arnold & Siedsma

(56) References cited:
- WO-A2-2007/145508
- DE-A1- 19 614 623
- DE-C1- 19 644 556
- DE-C1- 19 644 557
- DE-C1- 19 644 558

## Description

The invention relates to an extending fork for a fork-lift truck or pallet truck. Such an extending fork is length-adjustable and enables the length of the forks of a fork-lift truck or pallet truck provided therewith to be adapted to the goods to be transported.

In practice many goods are transported on pallets or other carriers. Use is here made in practice of different types and dimensions of for instance such pallets. Many pallets also have different lengths and widths. It can also be advantageous to pick up pallets from the front or conversely from a side. This means that standard forks of a fork-lift truck or pallet truck may for instance protrude beyond the pallet during pick-up thereof, this resulting in a risk of damage to other goods and/or persons. In the case of a relatively large pallet a standard fork may also support such a pallet only partially, this causing a pallet to overhang over the standard fork and creating the risk of the pallet falling off the fork. This entails a safety risk and the risk of damage to products.

Known in practice are fork-lift trucks, among other things, which for said reasons are provided with length-adjustable forks. These length-adjustable forks are manually adjustable or provided with a drive. Such a drive requires a complex drive system which usually takes a hydraulic form, wherein the extendable forks are coupled with their drive to the system of for instance the fork-lift truck. This is relatively complex and expensive. This also requires additional maintenance and entails the risk of failure.

DE 196 44 556 C1 discloses an extending fork.

Also known is a manually length-adjustable fork for a fork-lift truck, for instance described in NL 2011022. In such a fork a slidable fork part can be displaced relative to a fixed fork part. Because the adjustment can be performed manually, it is possible to dispense with a relatively complex drive. This makes such an extendable fork effective and relatively simple. A problem is here that a fork-lift truck driver for instance has to get off the fork-lift truck for the purpose of adjusting the fork. Especially in the case that dimensions of the pallets to be displaced keep varying does this manual adjustment have to take place frequently. This is time-consuming for the driver, which adversely affects the efficiency of the logistical function. There is also a safety risk in that the fork-lift truck must be stationary and the driver must exit the cab. Because this is not experienced as user-friendly in all cases, there is a risk that a driver will not consistently adapt the length of the fork to the load to be picked up, for instance in the case of a one-time variation in dimensioning. Risks in respect of safety and damage hereby continue to exist.

DE19644557C1 discloses an extending fork according to the preamble of claim .

The present invention has for its object to provide an extending fork for a fork-lift truck or pallet truck whereby the above stated problems are obviated or at least reduced.

This object is achieved with the electric extending fork according to claim 1.

Providing a base fork and sliding fork connected slidably thereto makes the length of the fork of a fork-lift truck or pallet truck adjustable. This adjustment makes it possible to adapt the fork length to the goods to be transported, for instance to the dimensions of a pallet to be displaced. This reduces the health risk to users of such a pallet truck or fork-lift truck, and to bystanders. The risk of damage to the goods to be displaced during picking up, moving, setting down and/or manoeuvring these goods is additionally reduced.

The sliding fork of the electric extending fork according to the invention is slidable relative to the base fork. This sliding relates to the sliding out, i.e. extending of the fork, and to the sliding in, i.e. the shortening of the overall fork length. This sliding is achieved with the electric extending fork according to the invention using an electrical drive system which is configured to slide the sliding fork out and in relative to the base fork. The use of an electrical drive system renders unnecessary the need to provide a hydraulic coupling between the extending fork, or at least the drive system thereof, and the hydraulic system of for instance a pallet truck or fork-lift truck. By providing an electrical drive system it is possible to suffice with a relatively simple coupling to for instance the battery of such a fork-lift truck or pallet truck. It is also possible, if desired, to provide a separate battery in the electric extending fork according to the invention.

The electrical drive system is further provided with a coupling to the sliding fork. This coupling is preferably a flexible coupling. Such a (flexible) coupling has the advantage that (a part of) the drive system can be positioned freely relative to the sliding fork. **In** a currently preferred embodiment an electric motor is provided at or close to the upper outer end of the vertical part of the fork and, using the (flexible) coupling, the movement is transmitted from a substantially vertically oriented shaft to an extending movement in a substantially horizontal direction. Making such a right-angled coupling flexible enables any possible bending of the fork as a result of the goods placed thereon to be accommodated without damage to the drive system. This is relevant inter alia because such bending will usually occur in practice, whereby sliding in and/or sliding out of the sliding fork relative to the base fork will result in more resistance. Owing to the flexible coupling, this can be obviated cost-effectively in relatively simple manner. This makes application of an electrical drive system feasible in practice without extremely large powers having to be used. Application of the electrical drive system makes the electric extending fork according to the invention length-adjustable in relatively simple manner. This prevents for instance a driver of a fork-lift truck from having to get off the fork-lift truck in order to change the length of the fork. This increases the safety of users and drivers during displacement of goods.

In order to further reduce the (undesirable) bending of the fork in practice a support element is arranged in or on the base fork. This support element provides additional support with respect to the sliding fork, whereby bending is reduced considerably. This simplifies sliding in or sliding out of the sliding fork relative to the base fork. Additionally, such a support element makes it possible to suffice with a smaller installed power for the electrical drive system. In a currently preferred embodiment the support element is provided as a support roller. Such a support roller can be embodied according to the invention as a roller element, wheel, barrel or other suitable support roller. Alternatively, the support element can comprise a different suitable element, for instance a wear strip or ball race. A plurality of support elements, such as support rollers or shared rollers, can optionally also be provided in order to thereby further increase the support for the sliding fork and particularly to further prevent bending of the fork.

An additional advantage of the electric extending fork according to the invention is that it can be applied in effective manner to both new and already existing fork-lift trucks or pallet trucks. This is made possible inter alia in that a hydraulic coupling between the extending fork and the fork-lift truck or pallet truck can be dispensed with. This increases the utility of the extending fork according to the present invention. In addition, a user can also perform the installation and/or removal of the extending fork on their own fork-lift truck or pallet truck in relatively simple manner. This increases the convenience of use and reduces costs of for instance maintenance.

Providing an electrical drive system additionally enables the sliding out and sliding in of the sliding fork relative to the base fork to be controlled in simple manner. This can for instance done from the driver's position by a user of a fork-lift truck. It is also possible, if desired, to provide a separate remote control whereby the length of the forks can be adjusted. If desired, such a remote control interacts with the control of the fork-lift truck so that a change in the length of the forks is for instance only possible when the fork-lift truck is stationary.

The electric extending fork according to the invention can be applied in a right-angled design for a fork, wherein a vertical part is connected to the carrier frame of a fork-lift truck and the horizontal part is used for displacing the goods, and also in a substantially horizontal fork, wherein the carrying part is connected directly to the frame, i.e. without interposing of a vertical part. This latter variant can for instance be advantageously applied in a pallet truck.

It has been found that in a currently preferred embodiment according to the invention the flexible coupling can be embodied as a cardan joint in effective manner. Experiments have shown that such a cardan joint provides on one hand an effective coupling and on the other imparts sufficient flexibility to be able to accommodate any bending of the forks without damage to the drive system. The cardan joint is preferably embodied as a double cardan joint. Likewise, such a flexible coupling in the form of a double cardan joint is preferably also applied in an above stated substantially horizontal fork, wherein the horizontal part is connected directly to the frame of the fork-lift truck or pallet truck. Alternative flexible couplings for instance make use of a toothed belt, chain or other suitable transmission. Further alternative couplings may include application of one or more gears of gearing wheels.

According to the invention the drive system comprises a spindle drive.

The spindle drive is preferably provided in the drive system since such a spindle drive enables a reliable sliding of the sliding fork relative to the base fork. This sliding can also be realized in sufficiently accurate manner. For this purpose different types of spindle can be applied, for instance so-called ball screw spindles or trapezoidal spindles. It will be apparent that other types of spindle can also be applied according to the invention. The spindle is preferably driven via the flexible coupling, particularly via a double cardan joint, from an electric motor, or alternatively via a toothed belt, chain or gears.

In an advantageous embodiment according to the invention the sliding fork is further provided with at least one slide block for sliding the sliding fork relative to the base fork.

Providing the sliding fork with at least one slide block makes it possible to realize an effective sliding of the sliding fork relative to the base fork. The slide blocks here limit the clearance and thereby for instance the sagging or buckling of the sliding fork relative to the base fork during extending thereof. The clearance between sliding fork and base fork is further reduced here, this also limiting the overall bending further. This additionally has a positive (reducing) effect on the electric power required for the electrical drive system which is applied in the electric extending fork according to the invention.

Additionally or in an alternative embodiment according to the invention, the sliding fork is provided with at least one bearing for sliding the sliding fork relative to the base fork. Such a bearing can be applied in addition to or instead of the above stated slide block. Such a bearing can for instance be a ball bearing or spherical roller bearing. It will be apparent that other suitable types of bearing can also be used. The clearance is limited further with such a bearing.

In an advantageous embodiment according to the invention the slide block and/or bearing is provided on both the side of the extending fork directed upward during use and the side directed downward during use. Providing such a slide block and/or bearing on both sides provides a better support for the sliding fork relative to the base fork and further reduces the risk of buckling or bending occurring. As already stated above, this has a positive effect on limiting the electric power required.

In an advantageous embodiment according to the invention the base fork is provided with a guide track configured to guide the sliding fork.

Providing a guide track enables the relative movement between the sliding fork and the base fork to take place in controlled manner. Such a guide track is preferably milled into the material of the base fork. Such a guide track can hereby be provided in effective manner and a form locking can additionally be realized, if desired.

In a currently preferred embodiment the sliding fork is provided with a slide block and/or bearing which moves over the guide track. Such a combination of guide track with slide block and/or bearing enables an effective sliding of the sliding fork relative to the base fork.

According to the invention the spindle is arranged in a housing.

Arranging the spindle in a housing shields it from the surrounding area. This has the advantage, among others, that contamination of the spindle is counteracted. This safeguards the lifespan and accuracy of the spindle and additionally significantly reduces the maintenance required. This therefore also increases the user-friendliness of the electric extending fork. In a currently preferred embodiment the housing is embodied as a type of tube or other tubular element which substantially surrounds the spindle. Additional strength is also imparted to the extending fork, this further reducing bending.

According to the invention the spindle housing is provided with a bending position.

By providing a specific bending position any bending which may occur can be fixated at a specific location. This considerably reduces the risk of damage occurring to the spindle. In practice, this prevents damage to the spindle, even when the forks are overloaded. Such a bending position can be realized in effective manner by arranging a weakening in the spindle housing, for instance by providing a recess and/or smaller wall thickness therein.

In a further advantageous embodiment according to the invention the extending fork is substantially closed on the side directed downward during use.

Additional strength is imparted to the extending fork by providing a substantially closed fork, i.e. a fork which is also substantially closed on the side directed downward during use. This results in, among other things, a further reduction of the possibly occurring bending, this enabling effective use of the extending fork. This additionally realizes a further shielding of the spindle, among other things, whereby contamination, or at least the risk thereof, is greatly reduced. This extends the lifespan of the extending fork and/or limits the maintenance required.
In a currently preferred embodiment the sliding fork is provided as a profile, and is preferably manufactured from a tube profile. Such a sliding fork can hereby be produced in cost-effective manner. In such a production process use is for instance made of a folding or bending process and/or a rolling process and/or extrusion process. A profiled tube profile can if desired be provided here for additional functionality and/or additional strength of the tube profile. A suitable design of such a tube profile makes it possible to further reduce material costs and/or increase the strength of the fork. The wall thickness of such a tube profile preferably lies in the range of 3-10 mm, for instance 3-4 mm. If desired, the tube profile can also be given wholly or partially different dimensions.

In a further advantageous embodiment according to the invention the drive is operatively connected to the sliding fork by means of a pin coupling.

By providing a pin coupling the drive system is connected to the sliding fork in effective manner. By controlling the drive system the movement initiated with the drive system is transmitted by the pin coupling to the sliding fork, which will then slide in or slide out. In a currently preferred embodiment the pin coupling is arranged in or on the nose part of the sliding fork. This makes it possible to realize an effective sliding of the sliding fork relative to the base fork. The pin coupling has the further additional advantage that the sliding fork can be uncoupled from the drive system in simple manner by removing the pin. This is for instance advantageous for maintenance purposes and/or for exchanging the sliding fork.

In a further advantageous embodiment according to the invention the electric extending fork is provided with a detector.

By providing a detector information regarding for instance the position and/or bending of the extending fork can be obtained. The detector can here make use of a magnet and/or microswitch and/or other suitable element. The detector is here preferably connected to the control of the fork-lift truck or pallet truck.

The extending fork is optionally provided with a locking mechanism for fixing the sliding fork at a desired position relative to the base fork. For this purpose a plurality of locking positions are preferably provided, or the sliding fork can be fixed at any desired position relative to the base fork. This preferably makes it possible to lock the position of the sliding fork relative to the base fork at more than a minimum and maximum length of the fork.

Providing a locking mechanism enables a safe operation. Providing the locking mechanism with a plurality of locking positions enables a flexible adaptation to the diverse dimensionings which occur in practice. Use can for instance be made here of for instance a pin-hole connection, wherein a plurality of holes are provided in a tube profile of the fork, a locking mechanism with which a locking is provided, or another suitable locking system.

The locking mechanism optionally further comprises a locking drive, wherein the locking drive can control the locking mechanism remotely. This makes it possible for a driver or user to activate or conversely deactivate the locking mechanism in effective manner. It is possible here for the driver to control the locking mechanism from the cab of a fork-lift truck. This further makes the use user-friendly in practice. The locking mechanism is further preferably provided with a sensor configured to detect a correct locking. This further increases the safety for remote control of the locking mechanism, for instance with a remote control from the cab of a fork-lift truck. It will be apparent that such a sensor can be provided in several ways, for instance on the basis of a contact or another signal.

The locking mechanism is preferably further provided with a battery. By providing a separate energy supply for the locking mechanism the modular sliding fork according to the invention can act substantially independently of drives of the fork-lift truck or pallet truck in effective manner. The simple installation and removal is hereby preserved for the modular sliding fork according to the invention.

An additional sensor system is optionally provided for the extending fork according to the invention. It is possible here to envisage a length measurement using for instance a cable transducer, a laser, an ultrasonic sensor. It is also possible to detect bending using for instance an angle measurement and a weight measurement. This can further improve the safety of the extending fork according to the invention. If desired, such a sensor system makes use of a transmitter and/or transmitter/receiver for the purpose of providing a wireless sensor system which is for instance in operative connection with a control.

The invention further relates to a fork-lift truck or pallet truck comprising an electric extending fork in an embodiment according to the invention.

Such a fork-lift truck or pallet truck provides similar advantages and effects as described for the electric extending fork.

The invention further also relates to a method for displacing goods with a fork-lift truck or pallet truck, comprising of:
- providing an electric extending fork in an embodiment according to the invention;
- determining the desired length of the fork;
- if desired, sliding the sliding fork out and/or in relative to the base fork until the desired length is reached; and
- displacing the goods.

Such a method provides the same effects and advantages as described for the electric extending fork and/or fork-lift truck or pallet truck.

Further advantages, features and details of the invention are elucidated on the basis of preferred embodiments thereof, wherein reference is made to the accompanying drawings, in which:
- Figure 1 shows a view of an electric extending fork in a first embodiment according to the invention;
- Figures 2A-B, 3 and 4 show sections and views of parts of the first embodiment;
- Figures 5-6A show longitudinal sections of the first embodiment in a first and a second position;
- Figures 6B-C show cross-sections of the first embodiment;
- Figures 7-11 show views and sections of an electric extending fork in a second embodiment according to the invention;
- Figures 12-13 show views and sections of an electric extending fork in a third, horizontal, embodiment according to the invention;
- Figure 14A shows a fork-lift truck provided with an extending fork according to the invention; and
- Figure 14B shows a pallet truck provided with an extending fork according to the invention.

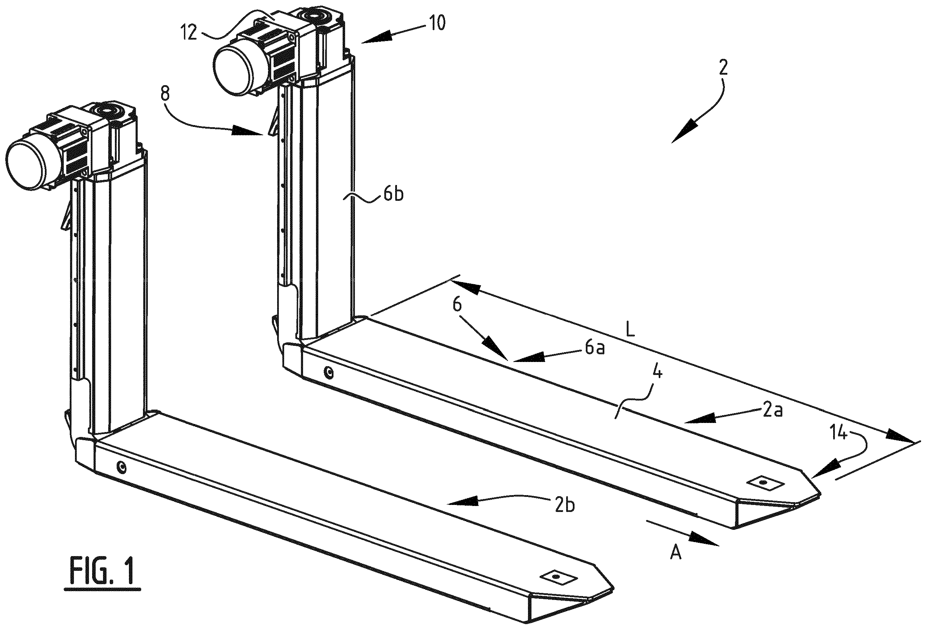

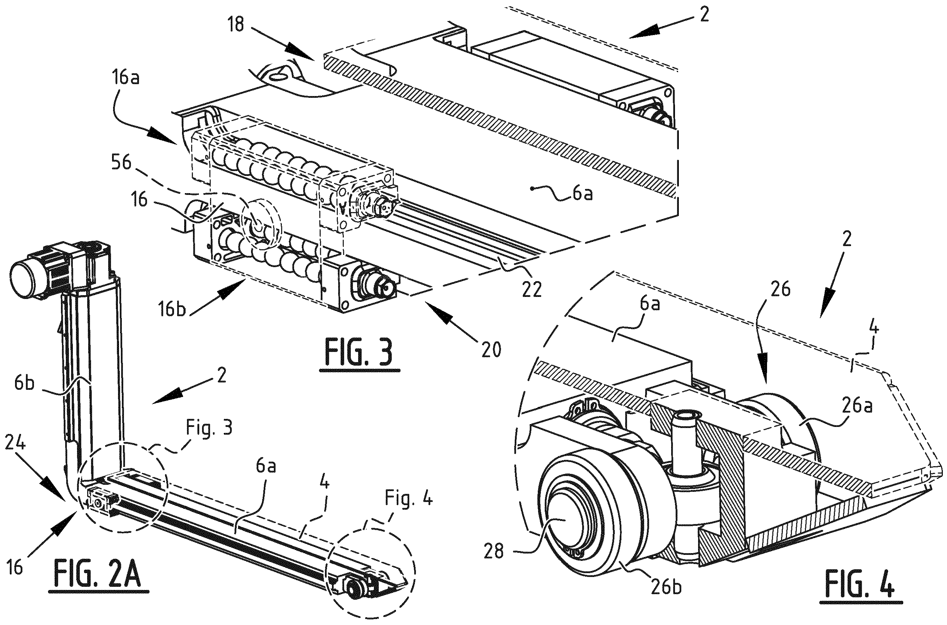

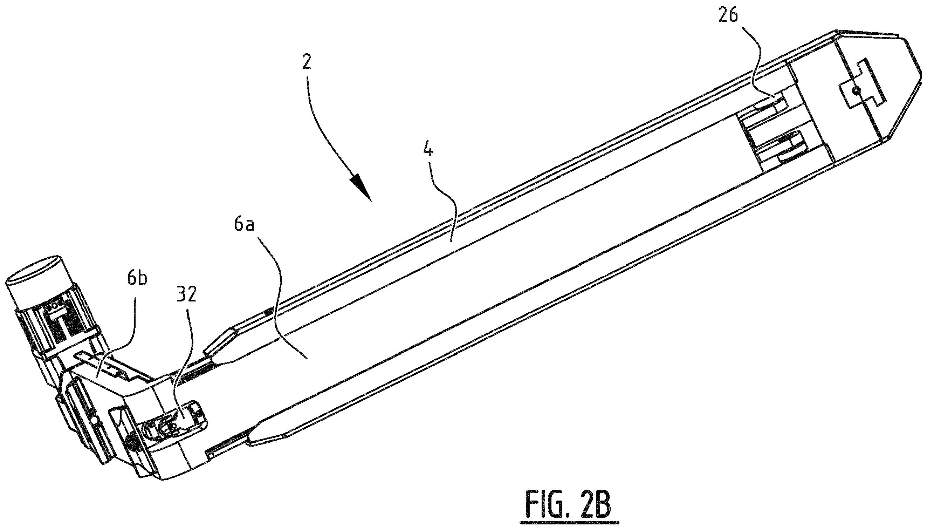

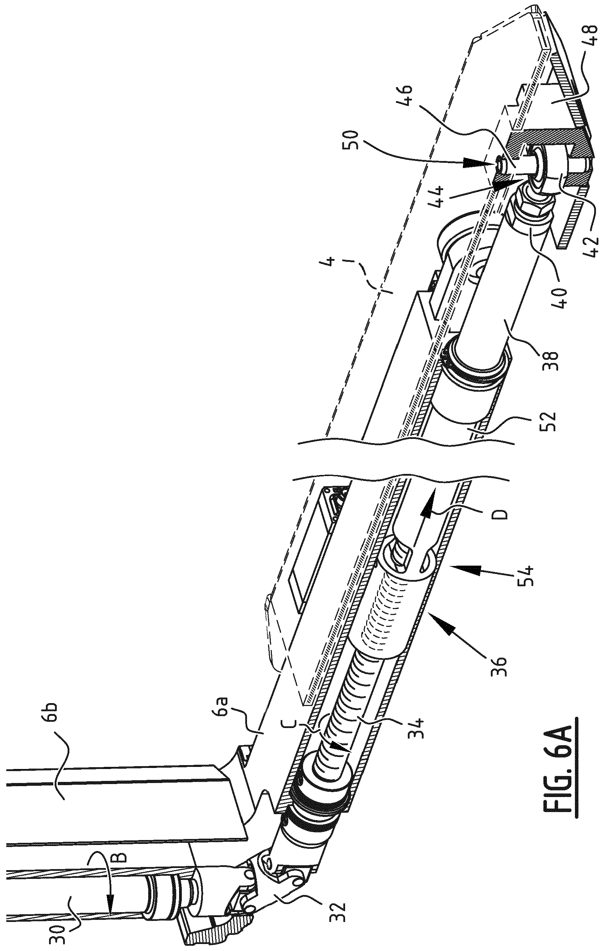

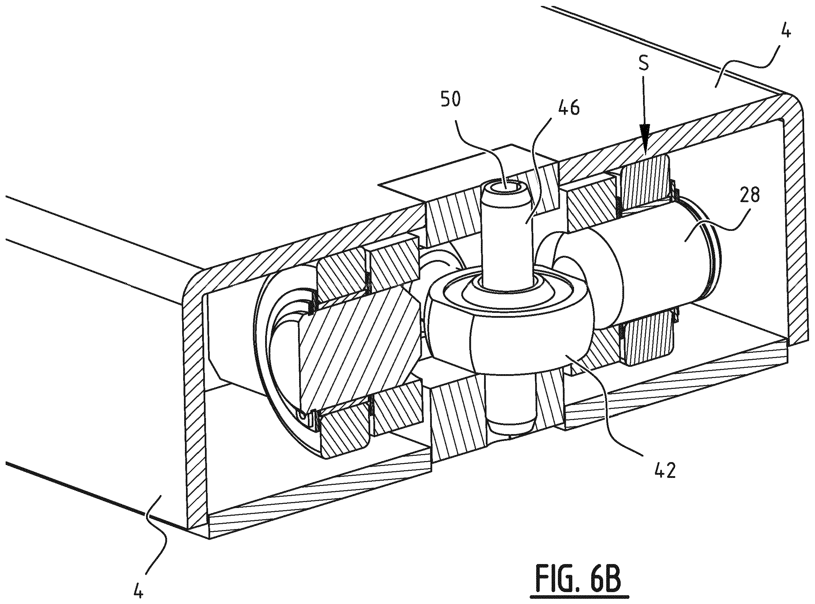

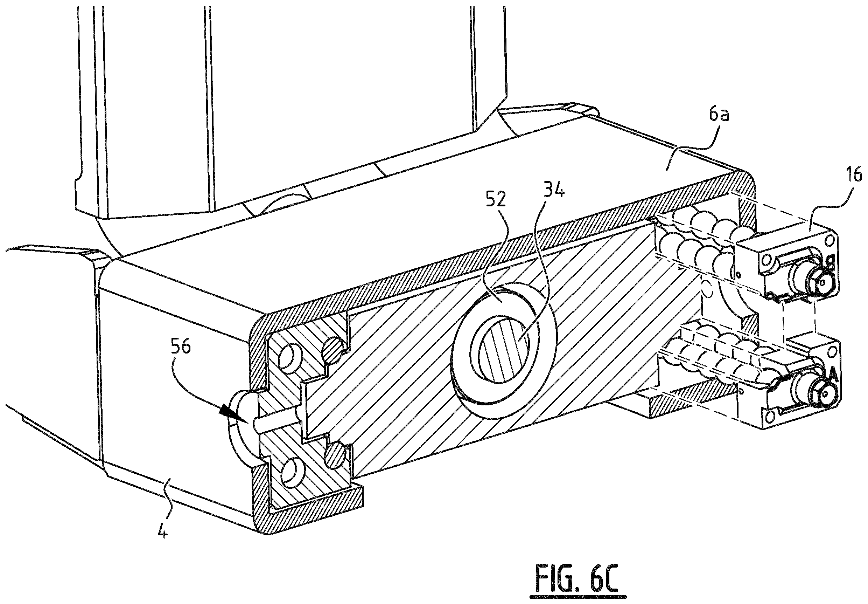

Electric extending fork 2 (figures 1-6) are usually embodied with two sub-forks 2a,b. Extending fork 2 is provided with sliding fork 4 and base fork 6. In the shown embodiment base fork 6 is provided with carrying part 6a, which is oriented horizontally during use, and mounting part 6b which is oriented vertically during use and on which connecting elements 8 are provided. In this shown embodiment drive system 10 is provided with electric motor 12 which is arranged on the upper side of vertical part 6b of base fork 6. Sliding fork 4 is provided with nose part 14 and is extendable relative to base fork 6 in direction A. In this shown embodiment sliding fork 4 is provided at the other end with bearing 16 (figures 2-3). In the shown embodiment bearing 16 is provided both on the left-hand side and on the right-hand side of sliding fork 4. A bearing is realized here with a bearing part 16a on upper side 18 of fork 2 and bearing part 16b on underside 20 of extending fork 2. Further provided in this embodiment is guide track 22, which is realized by milling this track out of fixed fork part 6a.

Carrying part 6a is connected via connecting part 24 to mounting part 6b. On the opposite, front side of carrying part 6a horizontal for part 6a is provided with support element 26 which is provided in the shown embodiment with support element(s) in the form of support roller 26a,b on either side of horizontally oriented carrying part 6a. In this embodiment support rollers 26a,b are embodied as wheels which are arranged rotatably on wheel shaft 28 and are in contact with sliding fork 4 via contact surface S.

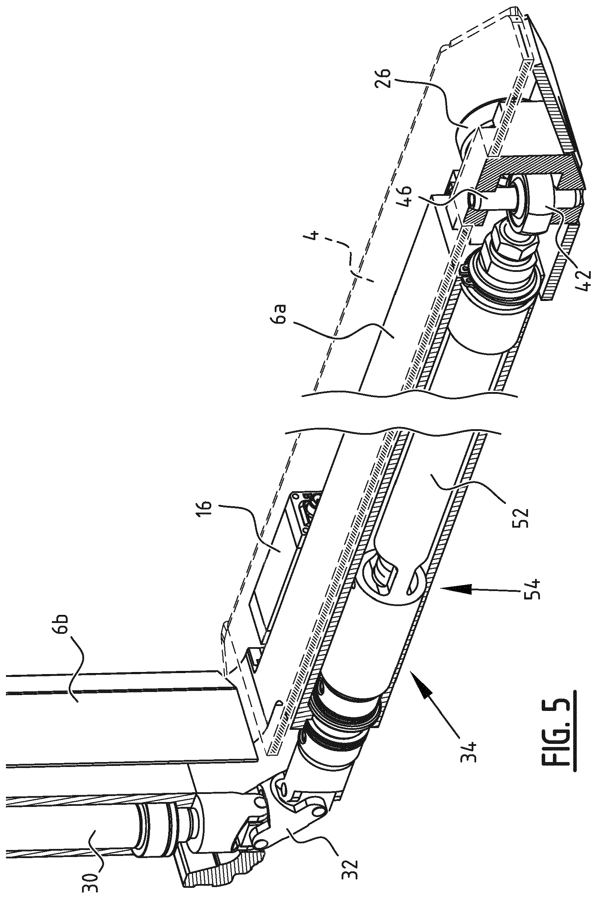

Electric motor 12 drives a vertically oriented drive rod 30 (figures 5-6) which is rotatable in direction B. Drive rod 30 is connected via double cardan joint 32 to spindle 34, which is rotatable in direction C. Rotation of spindle 34 moves nut 36 arranged thereon, causing rod 38 to extend. End 40 of rod 38 is connected to first coupling part 42 in which is arranged opening 44 in which second pin-like coupling part 46 can be arranged. Pin 46 is provided in housing 48, with which this housing is connected to sliding fork 4. In this shown embodiment pin 46 is placeable or removable via outer end 50 thereof. Movements in reverse direction are realized in order to slide sliding fork 4 in.

If sliding fork 4 must be slid out in direction A for the purpose of lengthening the overall fork length L, drive system 10 is activated. Electric motor 12 will hereby rotate drive rod 30 in direction B, wherein this movement in converted via cardan joint 32 into rotation C of spindle 34. This rotation then results in nut 36 of spindle 34 extending in direction D, causing rod 38 to extend as well. Coupling to first coupling part 42 and second pin coupling part 46 creates a connection to sliding fork 4, which will then slide out in direction A. This movement of sliding fork 4 in direction A is supported on the front side of fork part 6a using support rollers 26 and supported on the rear side of sliding fork 4 by bearing 16. In this embodiment spindle 34 is arranged in a tubular housing 52. Arranged in this housing is a recess or opening 54, which defines thereby a bending position. Bearing 16 can be set or adjusted via element 56 (figure 3).

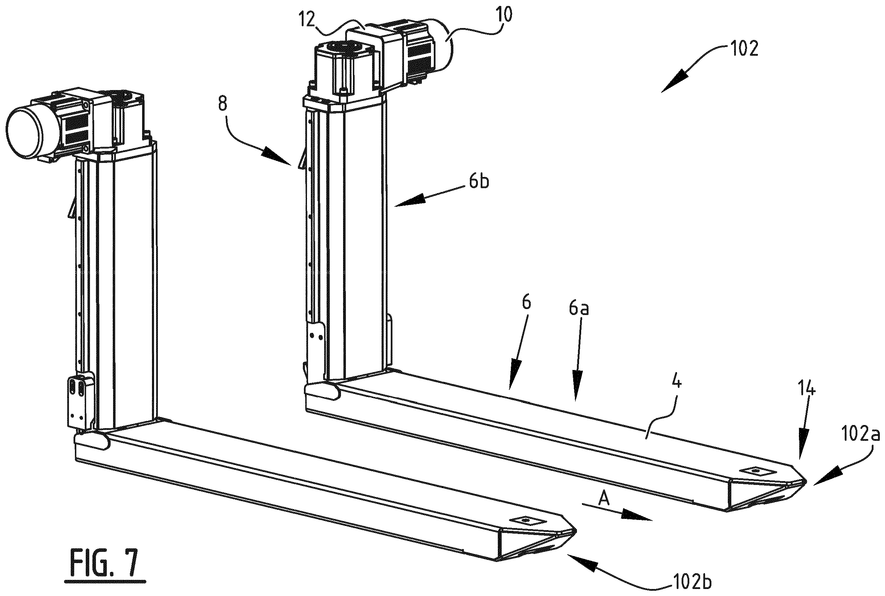

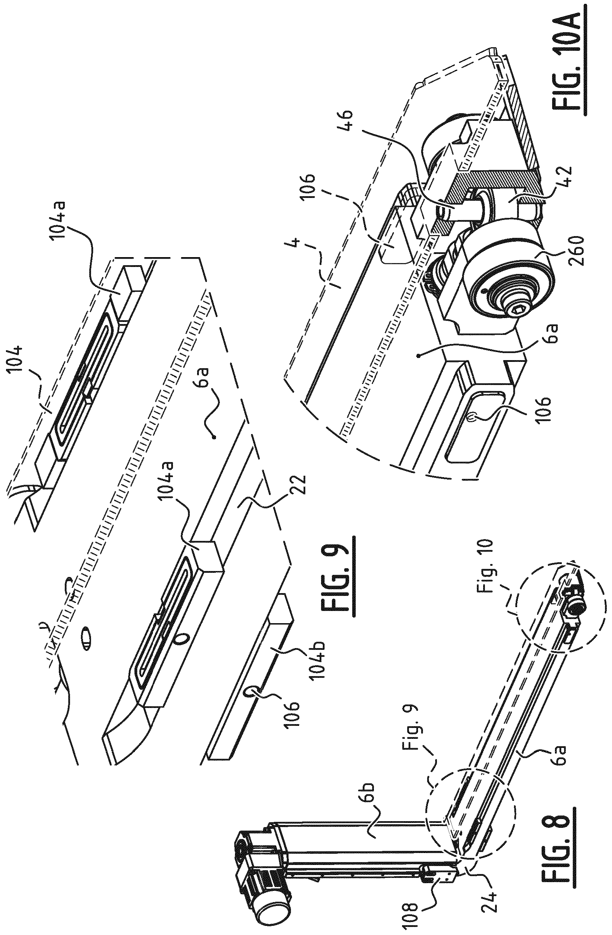

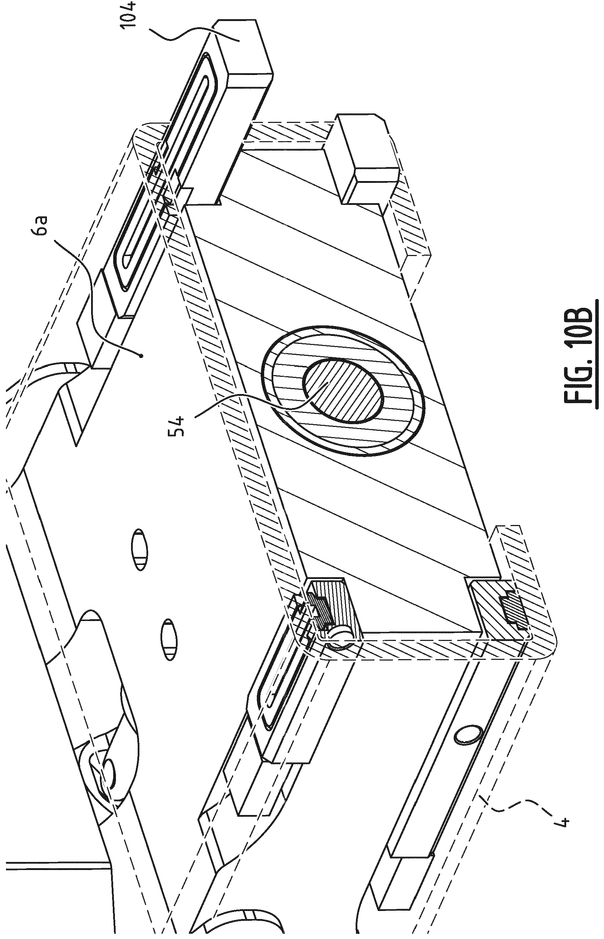

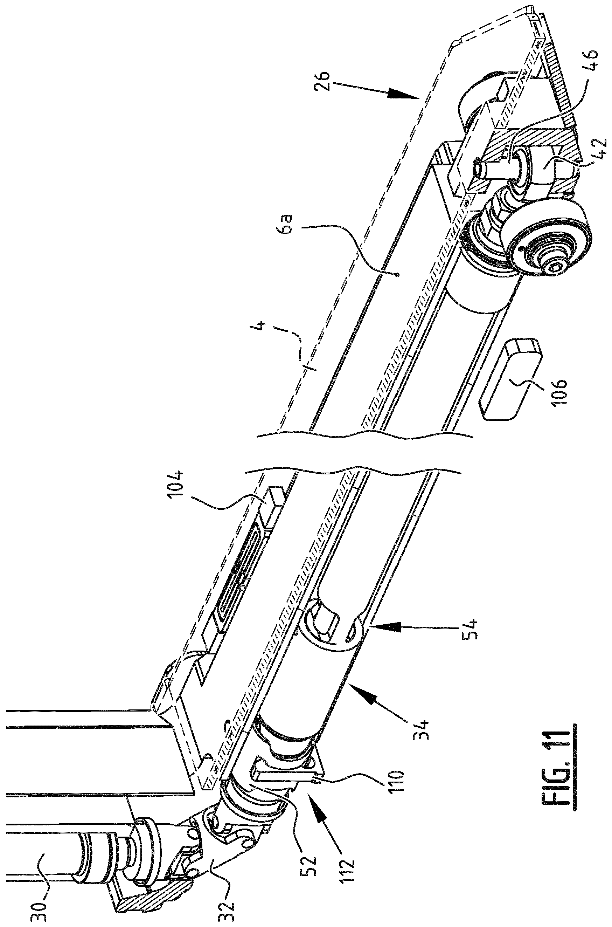

In a second embodiment electric extending fork 102 (figures 7-11) is likewise shown with two sub-forks 102a,b which are extendable in direction A. Extending fork 102 is likewise provided with sliding fork 4, base forks 6, 6a, 6b, connecting elements 8, and drive system 10 with electric motor 12. It is noted that in this shown second embodiment motors 12 are directed outward, while being directed toward the same side in the first embodiment. It will be apparent that the positioning of motors 12 can be adapted to the specific application and/or user preferences. Only the relevant differences between the two embodiments 2, 102 will be discussed below. The corresponding components are not elucidated specifically as such. A relevant distinction between embodiments 2, 102 is the guide close to the outer end of sliding fork 4 lying closest to transition 24 between horizontal fork part 6a and vertical fork part 6b. Sliding fork 4 is provided here with slide block 104a and slide block 104b on respectively the upper side and underside of fixed fork part 6a (figure 9). Slide blocks 104a,b together form slide block 104, wherein individual slide blocks 104a,b are movable over guide track 22. In the shown embodiment a slide block 104 is arranged on either side of fork part 6a.

A further distinction from second embodiment 102 is formed by arranged magnets 106 or magnetizable parts. These can function as locking and/or detector. It is also possible to apply microswitch 108 in order to perform further detection of position, length, bending and other relevant parameters therewith. Further arranged in the shown embodiment of extending fork 102 is a clip element 110 which can be placed in a recess 112 of tube 52. Spindle 34 can hereby be positioned in fixed horizontal fork part 6a in efficient manner.

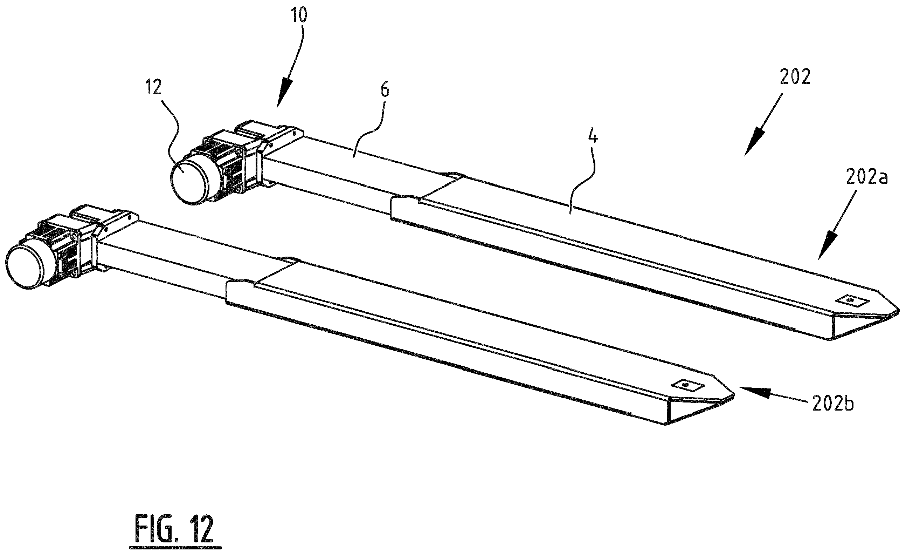

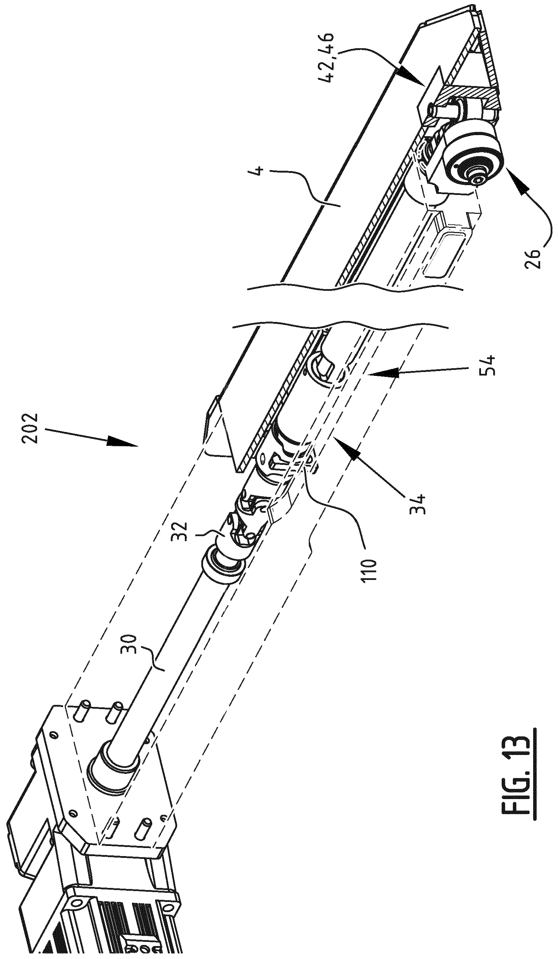

In a third embodiment for electric extending fork 202 (figures 12-13) two sub-forks 202a,b are also provided. A significant distinction from the first and second embodiments 2, 102 is that a substantially vertically oriented, fixed fork part has been dispensed with. Electric extending fork 202 therefore comprises sliding fork 4, base fork 6 and drive system 10 with motor 12. Although oriented substantially horizontally, extending fork 202 likewise comprises drive rod 30, double cardan joint 32 and spindle 34. Other elements, including support rollers 26, and coupling 42, 46 are also provided between spindle 34 and sliding fork 4. It will be understood that the coupling of drive system 10 in further embodiments of the invention may comprise a toothed belt, chain, gears/gearing wheels.

In the various shown embodiments for electric extending fork 2, 102, 202 sliding fork 4 is provided from sheet material, for instance by folding it into a desired profile. In the shown embodiments fork 2, 102, 202 is substantially closed all the way around, i.e. also closed on the side directed downward during use.

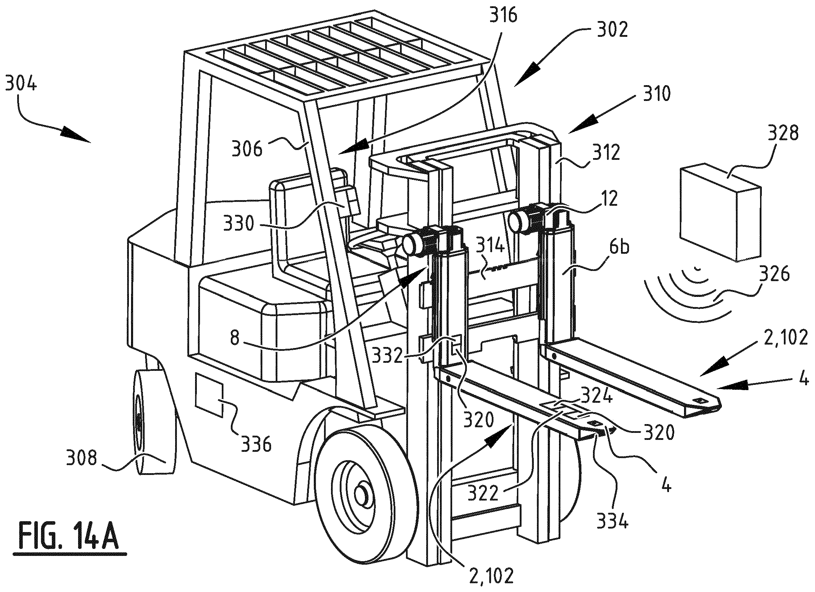

Fork-lift truck 302 (figure 14A) is provided with cab 304, frame 306 and wheels 308, mast construction 310 provided with guides 312 on which fork board 314 is displaceably mounted. Vertically oriented parts 6b are mountable on fork board 314 via couplings 8. Electric extending fork 2, 102 is hereby mountable on fork-lift truck 302. An operator or driver can preferably adjust fork length L from driver's position 316.

Also provided for fork-lift truck 302 in the shown embodiment is sensor system 318 comprising possible sensors/detectors in sensor part 320, sensor receiver 322 and optional power supply battery 324. Sensors 320 are for instance one or more of an inclinometer, strain gauges, cable transducer, laser, ultrasonic sensor. Sensors 320 can be aimed at measuring an occurring load, fork length, position relative to a ground surface and the like. It will also be apparent that parts or the whole sensor system 318 can be arranged at a different location or distributed over multiple locations. Strain gauges will thus for instance preferably be arranged in or on a vertical part of forks 2, 102. Fork-lift truck 302 can optionally communicate via signals 326 with (external) control system 328, for instance an ERP system. Arranged in cab 304 in the shown embodiment is control box or interface 330, whereby a user or driver is informed of for instance the correct operation of electric extending fork 2, 102. A further sensor 332 can be provided on fork part 4, as can an optional laser pointer 334 close to the nose of sliding fork 4. In this embodiment drive system 10 is preferably operatively connected to battery 336 of fork-lift truck 302.

It will be apparent that the diverse described or otherwise cited possibilities and options can be combined into new embodiments according to the invention in different combinations.

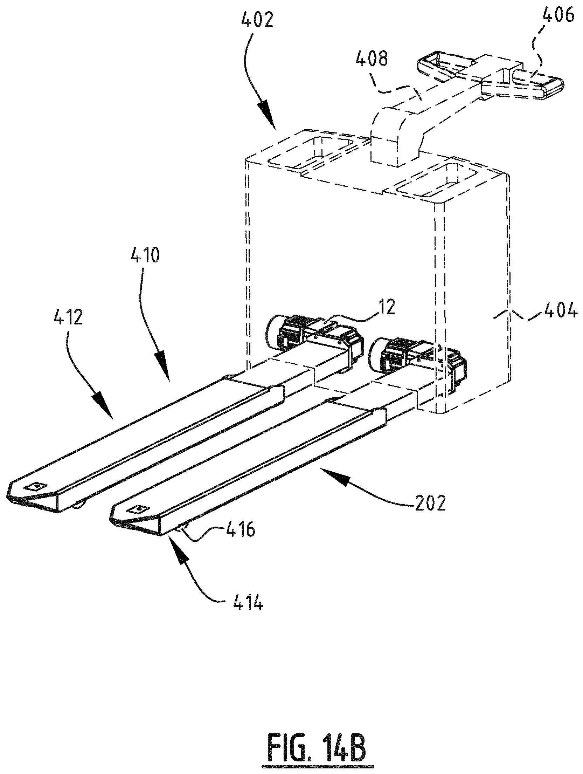

Pallet truck 402 (figure 14B) is provided with frame 404, handle 406 and arm 408. Further provided on frame 404 are forks 202, wherein sliding fork 4 is provided with wheel 416, as is usual for pallet trucks. If desired, it is possible also to apply the diverse options and additions, for instance in respect of sensor systems, described and/or shown for fork-lift truck 302 to pallet truck 402.

The present invention is by no means limited to the above described preferred embodiments thereof. The rights sought are defined by the following claims, within the scope of which many modifications can be envisaged.

## Claims

1. Electric extending fork (2, 102, 202) for a fork-lift truck (302) or pallet truck (402), the extending fork comprising:
- a base fork (6) arrangeable on a fork-lift truck or pallet truck;
- a sliding fork (4) connected slidably to the base fork;
- an electrical drive system (10) configured to slide the sliding fork out and in relative to the base fork,
wherein the drive system (10) comprises a spindle drive (12, 30) and a spindle (34),
wherein the spindle is arranged in a spindle housing (52), the extending fork being **characterised by**
a support element (26) arranged in or on the base fork (6) to provide additional support with respect to the sliding fork (4),
and the spindle housing (52) being provided with a bending position (54) such that any bending which may occur can be fixated at a specific location.

2. Electric extending fork according to claim 1, wherein the coupling comprises a cardan joint (32).

3. Electric extending fork according to any one of the foregoing claims, wherein the support element comprises a support roller (26).

4. Electric extending fork according to any one of the foregoing claims, wherein the sliding fork is provided with at least one slide block (104) for sliding the sliding fork relative to the base fork.

5. Electric extending fork according to any one of the foregoing claims, wherein the sliding fork is provided with at least one bearing (16) for sliding the sliding fork relative to the base fork (104).

6. Electric extending fork according to claim 4 or 5, wherein a slide block and/or bearing is provided on the side (18) directed upward during use and the side (20) directed downward during use.

7. Electric extending fork according to any one of the foregoing claims, wherein the base fork is provided with a guide track (22) configured to guide the sliding fork.

8. Electric extending fork according to any one of the foregoing claims, wherein the fork is substantially closed on the side directed downward during use.

9. Electric extending fork according to any one of the foregoing claims, wherein the fork is substantially closed to shield the spindle.

10. Electric extending fork according to any one of the foregoing claims, wherein the drive is operatively connected to the sliding fork with a pin coupling (46).

11. Electric extending fork according to any one of the foregoing claims, further comprising a detector (106, 108).

12. Fork-lift truck (302) or pallet truck (402) comprising an electric extending fork (2, 102, 202) according to any one of the foregoing claims.

13. Method for displacing goods with a fork-lift truck (302) or pallet truck (402), comprising of:
- providing an electric extending fork (2, 102, 202) according to any one of the claims 1-11;
- determining the desired length of the fork;
- if desired, sliding the sliding fork (4) out and/or in relative to the base fork (6) until the desired length is reached; and
- displacing the goods.

## Patentansprüche

1. Elektrische ausfahrbare Gabel (2, 102, 202) für einen Gabelstapler (302) oder einen Hubwagen (402), die ausfahrbare Gabel umfassend:
- eine Grundgabel (6), die an einem Gabelstapler oder einem Hubwagen angeordnet werden kann;
- eine Gleitgabel (4), die mit der Grundgabel gleitend verbunden ist;
- ein elektrisches Antriebssystem (10), das konfiguriert ist, um die Gleitgabel relativ zu der Grundgabel heraus- und hineingleiten zu lassen,
wobei das Antriebssystem (10) einen Spindelantrieb (12, 30) und eine Spindel (34) umfasst,
wobei die Spindel in einem Spindelgehäuse (52) angeordnet ist, wobei die ausfahrbare Gabel **gekennzeichnet ist durch**
ein Stützelement (26), das in oder an der Grundgabel (6) angeordnet ist, um eine zusätzliche Stütze in Bezug auf die Gleitgabel (4) bereitzustellen,
und dass das Spindelgehäuse (52) derart mit einer Biegeposition (54) versehen ist, dass eine beliebige Biegung, die auftreten kann, an einer spezifischen Stelle fixiert werden kann.

2. Elektrische ausfahrbare Gabel nach Anspruch 1, wobei die Kupplung ein Kardangelenk (32) umfasst.

3. Elektrische ausfahrbare Gabel nach einem der vorstehenden Ansprüche, wobei das Stützelement eine Stützrolle (26) umfasst.

4. Elektrische ausfahrbare Gabel nach einem der vorstehenden Ansprüche, wobei die Gleitgabel mit mindestens einem Gleitblock (104) zum Gleiten der Gleitgabel relativ zu der Grundgabel versehen ist.

5. Elektrische ausfahrbare Gabel nach einem der vorstehenden Ansprüche, wobei die Gleitgabel mit mindestens einem Lager (16) zum Gleiten der Gleitgabel relativ zu der Grundgabel (104) versehen ist.

6. Elektrische ausfahrbare Gabel nach Anspruch 4 oder 5, wobei ein Gleitblock und/oder ein Lager auf der Seite (18), die während einer Verwendung nach oben gerichtet ist, und der Seite (20), die während der Verwendung nach unten gerichtet ist, bereitgestellt ist.

7. Elektrische ausfahrbare Gabel nach einem der vorstehenden Ansprüche, wobei die Grundgabel mit einer Führungsbahn (22) versehen ist, die konfiguriert ist, um die Gleitgabel zu führen.

8. Elektrische ausfahrbare Gabel nach einem der vorstehenden Ansprüche, wobei die Gabel auf der Seite, die während der Verwendung nach unten gerichtet ist, im Wesentlichen geschlossen ist.

9. Elektrische ausfahrbare Gabel nach einem der vorstehenden Ansprüche, wobei die Gabel im Wesentlichen geschlossen ist, um die Spindel abzuschirmen.

10. Elektrische ausfahrbare Gabel nach einem der vorstehenden Ansprüche, wobei der Antrieb mit der Gleitgabel über eine Stiftkupplung (46) wirkverbunden ist.

11. Elektrische ausfahrbare Gabel nach einem der vorstehenden Ansprüche, ferner umfassend einen Detektor (106, 108).

12. Gabelstapler (302) oder Hubwagen (402), umfassend eine elektrische ausfahrbare Gabel (2, 102, 202) nach einem der vorstehenden Ansprüche.

13. Verfahren zum Versetzen von Gütern mit einem Gabelstapler (302) oder einem Hubwagen (402), umfassend:
- Bereitstellen einer elektrischen ausfahrbaren Gabel (2, 102, 202) nach einem der Ansprüche 1 bis 11;
- Bestimmen der gewünschten Länge der Gabel;
- falls gewünscht, Heraus- und/oder Hineingleitenlassen der Gleitgabel (4) relativ zu der Grundgabel (6), bis die gewünschte Länge erreicht ist; und
- Versetzen der Güter.

## Revendications

1. Fourche électrique extensible (2, 102, 202) pour un chariot élévateur à fourche (302) ou un chariot à palettes (402), la fourche extensible comprenant :
- une fourche de base (6) pouvant être agencée sur un chariot élévateur à fourche ou un chariot à palettes ;
- une fourche coulissante (4) reliée de manière coulissante à la fourche de base ;
- un système d'entraînement électrique (10) conçu pour faire glisser la fourche coulissante vers l'extérieur et vers l'intérieur par rapport à la fourche de base,
dans lequel le système d'entraînement (10) comprend un entraînement de broche (12, 30) et une broche (34),
dans lequel la broche est agencée dans un boîtier de broche (52), la fourche extensible étant **caractérisée par**
un élément de support (26) agencé dans ou sur la fourche de base (6) pour fournir un support supplémentaire par rapport à la fourche coulissante (4),
et le boîtier de broche (52) étant pourvu d'une position de flexion (54) de telle sorte que toute flexion pouvant se produire peut être fixée à un emplacement spécifique.

2. Fourche électrique extensible selon la revendication 1, dans laquelle l'accouplement comprend une articulation à cardan (32).

3. Fourche électrique extensible selon l'une quelconque des revendications précédentes, dans laquelle l'élément de support comprend un rouleau de support (26).

4. Fourche électrique extensible selon l'une quelconque des revendications précédentes, dans laquelle la fourche coulissante est pourvue d'au moins un bloc coulissant (104) pour faire coulisser la fourche coulissante par rapport à la fourche de base.

5. Fourche électrique extensible selon l'une quelconque des revendications précédentes, dans laquelle la fourche coulissante est pourvue d'au moins un roulement (16) pour faire coulisser la fourche coulissante par rapport à la fourche de base (104).

6. Fourche électrique extensible selon la revendication 4 ou 5, dans laquelle un bloc coulissant et/ou roulement est fourni sur le côté (18) dirigé vers le haut pendant l'utilisation et sur le côté (20) dirigé vers le bas pendant l'utilisation.

7. Fourche électrique extensible selon l'une quelconque des revendications précédentes, dans laquelle la fourche de base est pourvue d'un rail de guidage (22) conçu pour guider la fourche coulissante.

8. Fourche électrique extensible selon l'une quelconque des revendications précédentes, dans laquelle la fourche est sensiblement fermée sur le côté dirigé vers le bas pendant l'utilisation.

9. Fourche électrique extensible selon l'une quelconque des revendications précédentes, dans laquelle la fourche est sensiblement fermée pour protéger la broche.

10. Fourche électrique extensible selon l'une quelconque des revendications précédentes, dans laquelle l'entraînement est relié de manière fonctionnelle à la fourche coulissante par un accouplement à goupille (46).

11. Fourche électrique extensible selon l'une quelconque des revendications précédentes, comprenant en outre un détecteur (106, 108).

12. Chariot élévateur à fourche (302) ou chariot à palettes (402) comprenant une fourche électrique extensible (2, 102, 202) selon l'une quelconque des revendications précédentes.

13. Procédé de déplacement de marchandises avec un chariot élévateur à fourche (302) ou un chariot à palettes (402), comprenant :
- la fourniture d'une fourche électrique extensible (2, 102, 202) selon l'une quelconque des revendications 1 à 11 ;
- la détermination de la longueur souhaitée de la fourche ;
- si souhaité, le coulissement de la fourche coulissante (4) vers l'extérieur et/ou vers l'intérieur par rapport à la fourche de base (6) jusqu'à ce que la longueur souhaitée soit atteinte ; et
- le déplacement des marchandises.
